Europäisches Patentamt

European Patent Office

Office européen des brevets

(11) Publication number: **0 200 446**
A1

## (12) EUROPEAN PATENT APPLICATION

(21) Application number: 86302967.4

(22) Date of filing: 21.04.86

(51) Int. Cl.⁴: **F 16 F 9/44**
**B 60 G 13/08**

(30) Priority: 25.04.85 US 727231

(43) Date of publication of application:
05.11.86 Bulletin 86/45

(84) Designated Contracting States:
AT BE CH DE FR GB IT LI LU NL SE

(71) Applicant: MOOG INC.
Jamison Road
East Aurora New York 14052(US)

(72) Inventor: Cummins, Richard D.
6092 Emerson Road
Orchard, Park New York 14127(US)

(74) Representative: Taylor, Derek George et al,
MATHISEN, MACARA & CO. The Coach House 6-8
Swakeleys Road
Ickenham Uxbridge UB10 8BZ(GB)

(54) A damping mechanism.

(57) An automotive shock absorber has a piston-like member (21) mounted for vertical sliding movement within a cylindrical enclosure (26). The member separates an "active" chamber (23) from a "reactive" chamber (24). The member is connected to a vehicle body, while the enclosure is connected to a control arm in the vehicle's suspension system. The member has a head and body which define an internal cavity. A main passageway through the head communicates the "active" and "reactive" chambers. A valve element (30) is mounted in the cavity, and is biased to move toward a seat (54) on the head to normally close the main passageway. However, even when the element engages the seat to close the main passageways, the "active" and "reactive" chambers continue to communicate with one another via a pilot passageway (72 or 73) which includes fixed and variable orifices (102, 110) which are in series with one another.

Fig. 1.

Fig. 3.

## A DAMPING MECHANISM

This invention relates to a damping mechanism, such as an automotive shock absorber, having a member (such as a piston) mounted for movement within an enclosure (such as a cylinder). The member separates an "active" chamber on one side thereof from a "reactive" chamber on the other side thereof. The member is adapted to be connected to a first mass (such as the body of a vehicle), and the enclosure is adapted to be connected to a second mass (such as a control arm). The "active" and "reactive" chambers are normally filled with a suitable fluid, such as oil.

According to the present invention there is provided a damping mechanism having a member movably mounted within an enclosure, said member separating an active chamber on one side thereof from a reactive chamber on the other side thereof, said member being adapted to be connected to a first mass and said enclosure being adapted to be connected to a second mass, said active and reactive chambers being filled with fluid, characterised by a main passageway provided through said member so as to communicate said active and reactive chambers, said main passageway including a cavity within said member, a first passageway portion communicating said active chamber with said cavity, and a second passageway portion communicating said reactive chamber with said cavity, a portion of said member about one of said passageway portions providing a seat facing into said cavity, a valve element mounted on said member within said cavity and subdividing said cavity into a first chamber and a second chamber, said element having a first surface arranged to face into said first chamber toward said first and second passageway portions and having a second surface arranged to face into said second chamber, said element

1

having a portion arranged for selective movement toward and away from said seat to control the flow of fluid through said main passageway, said element portion being biased to engage said seat to normally close said main passageway; a first restricted orifice provided through one of said member and element for communicating said second chamber with one of said active and reactive chambers when said element portion engages said seat; and a first pilot passageway provided through said member and communicating said second chamber with the other of said active and reactive chambers, said first pilot passageway including a second restricted orifice, whereby, when said element portion engages said seat to close said main passageway, fluid may flow from one of said active and reactive chambers to the other of said active and reactive chambers by passing sequentially through said first and second orifices.

Preferably, at least one of the restricted orifices is of variable cross-sectional area such that the performance characteristics of the mechanism may be selectively varied. The first orifice may be of constant cross-sectional area, while the cross-sectional area of the second orifice may be varied in response to a desired condition or a sensed parameter. For example, the size of the second orifice may be: (1) varied manually in response to an operator-controlled selector switch which indicates the "stiffness" or "softness" of the ride desired; or (2) varied automatically, for example, in response to the signal generated by an accelerometer or the like; or (3) varied as a function of the position of the member relative to either the enclosure or some other structure; or (4) varied with some other parameter; or (5) varied as a combination of the foregoing.

2

0200446

The invention will now be particularly described, by way of example, with reference to the accompanying drawings.

In the drawings:-

Fig.1 is a fragmentary vertical sectional view of a first embodiment of the shock absorber;

Fig.2a is a reduced-scale vertical sectional view of the structure shown in Fig.1, and illustrates a poppet valve member as sealingly engaging its seat to close the main passageway;

Fig.2b is a view similar to Fig.2a, but illustrates the poppet valve member as having been displaced off its seat to open the main passageway;

Fig.3a is an enlarged fragmentary detail view of the first restricted orifice, this view showing an output shaft as being positioned vertically such that a small diameter hole in the shaft is completely exposed;

Fig.3b is a view similar to Fig.3a, but shows the output shaft as having been moved downwardly relative to the body of the member such that a fractional portion of the small diameter shaft hole remains exposed;

Fig.3c is a view similar to Fig.3b but shows the output shaft as having moved further downwardly relative to the body such that a still-smaller fractional portion of the small diameter shaft hole remains exposed;

Fig.4 is a hydraulic schematic diagram of the shock absorber shown in Fig.1;

Fig.5 is a fragmental vertical sectional view of a second embodiment of the shock absorber;

Fig.6a is a reduced-scale vertical sectional view of the structure shown in Fig.5, and illustrates a diaphragm as sealingly engaging a seat to close the main passageway;

Fig.6b is a view similar to Fig.6a, but shows the

3

diaphragm as having been displaced off its seat to open the main passageway;

Fig.7a is an enlarged fragmentary detail view of the variable first restricted orifice in a fully-opened condition;

Fig.7b is a view similar to Fig.7a, but shows the output shaft as having been selectively rotated relative to the body to reduce the cross-sectional area of the first restricted orifice;

Fig.7c is a view similar to Fig.7b, but shows the output shaft as having been further rotated relative to the body to further reduce the cross-sectional area of the first restricted orifice;

Fig.8 is a hydraulic schematic diagram of the shock absorber shown in Fig.5;

Fig.9 is a fragmentary vertical sectional view of a third embodiment of the shock absorber;

Fig.10a is a reduced-scale vertical sectional view of the structure shown in Fig.9, and illustrates the piston-like member as sealingly engaging its seat to close the main passageway;

Fig.10b is a view similar to Fig.10a, but shows the piston-like member as having been displaced off its seat to open the main passageway;

Fig.11 is a hydraulic schematic diagram of the shock absorber shown in Fig.9;

Fig.12 is a frgmentary vertical sectional view of a fourth embodiment of the shock absorber;

Fig.13a is a reduced-scale vertical section view of the structure shown in Fig.12, and shows the piston-like member as sealingly engaging its seat;

Fig.13b is a view similar to Fig.13a, but shows the piston-like member as having been moved upwardly off its seat;

Fig.14 is a hydraulic schematic diagram of the shock absorber shown in Fig.12.

At the outset, it should be clearly understood that like reference numerals are intended to identify the same structural elements, portions or surfaces consistently throughout the several drawing figures, as such elements, portions or surfaces may be further described or explained by the entire written specification, of which this detailed description is an integral part. Unless otherwise indicated, the drawings are intended to be read (e.g. cross-hatching, arrangement of parts, etc.) together with the specification, and are to be considered a portion of the entire "written description" of this invention. As used in the following description the terms "left", "right", "up" and "down", as well as adjectival and adverbial derivatives thereof (e.g. "leftwardly", "rightwardly", etc.), refer to the orientation of the illustrated structure as the particular drawing figure faces the reader. Similarly, the terms "inwardly" and "outwardly" refer to the orientation of a surface relative to its axis of elongation.

In the following description and in the accompanying drawings, the invention is disclosed as being incorporated in a vehicular shock absorber. However, this is only one species example of many varied and diverse types of damping mechanisms in which the invention may possibly be employed. Thus, as used herein, the expression "damping mechanism" includes, but is not limited to, shock absorbers

5

for vehicular or automotive applications, shock or energy absorbers for other applications, as well as other types of energy-absorbing damping-type mechanisms.

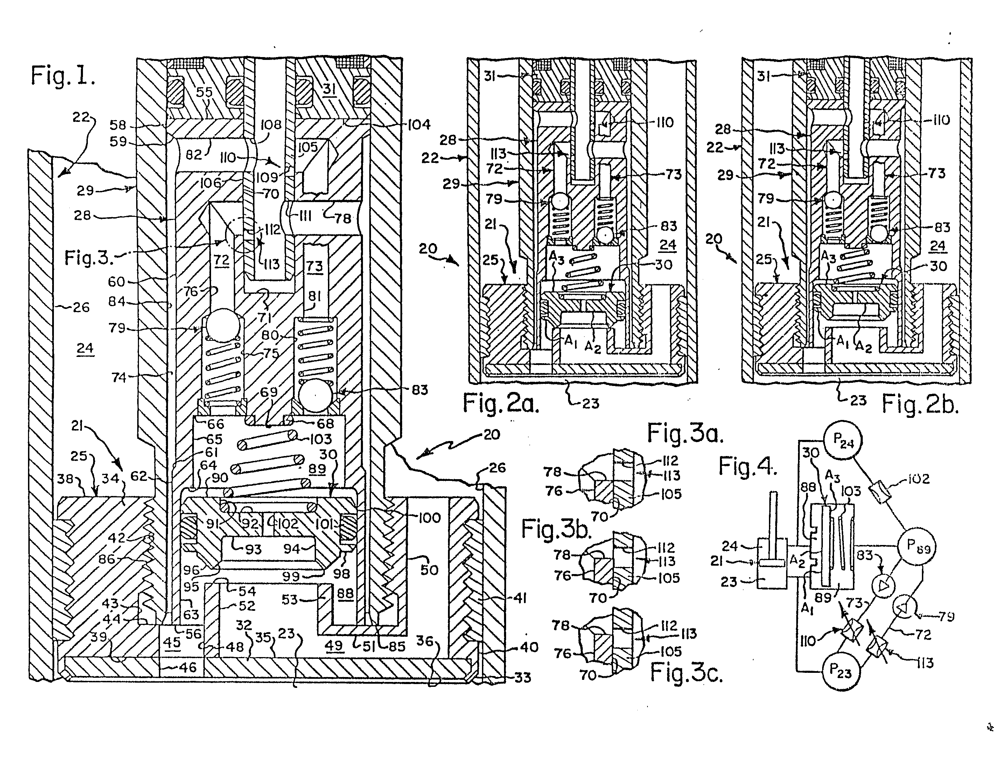

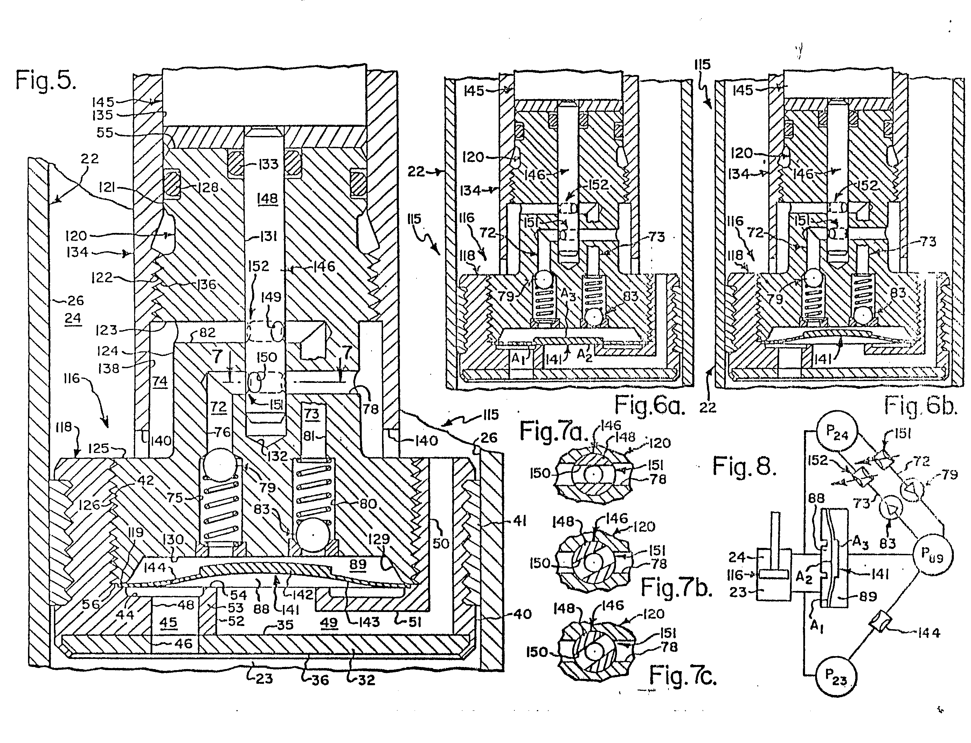

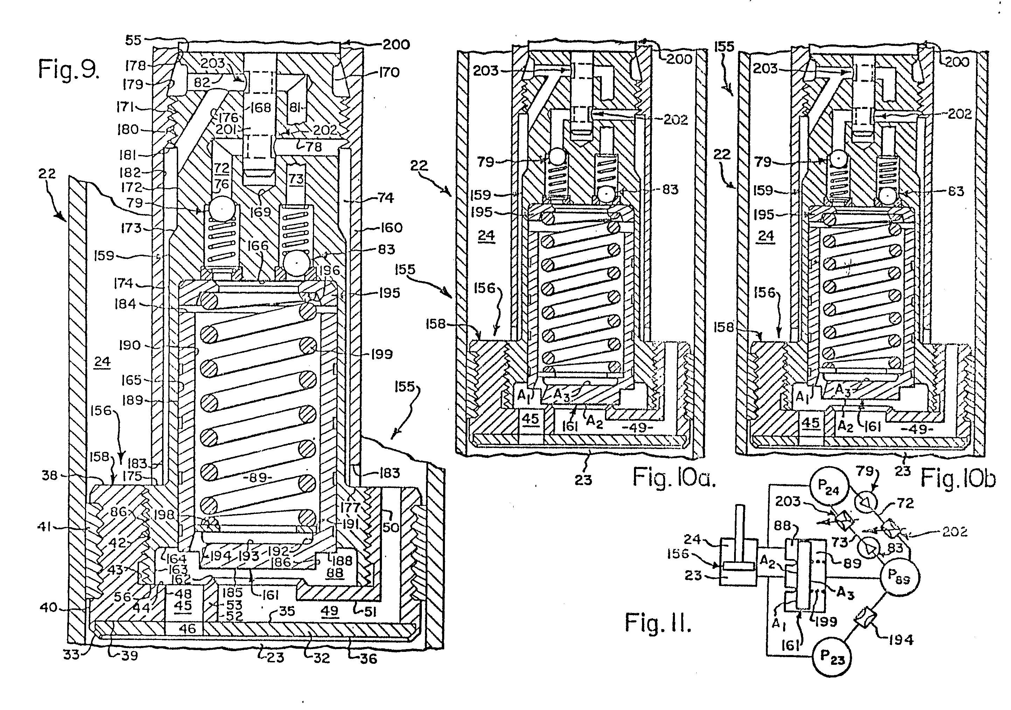

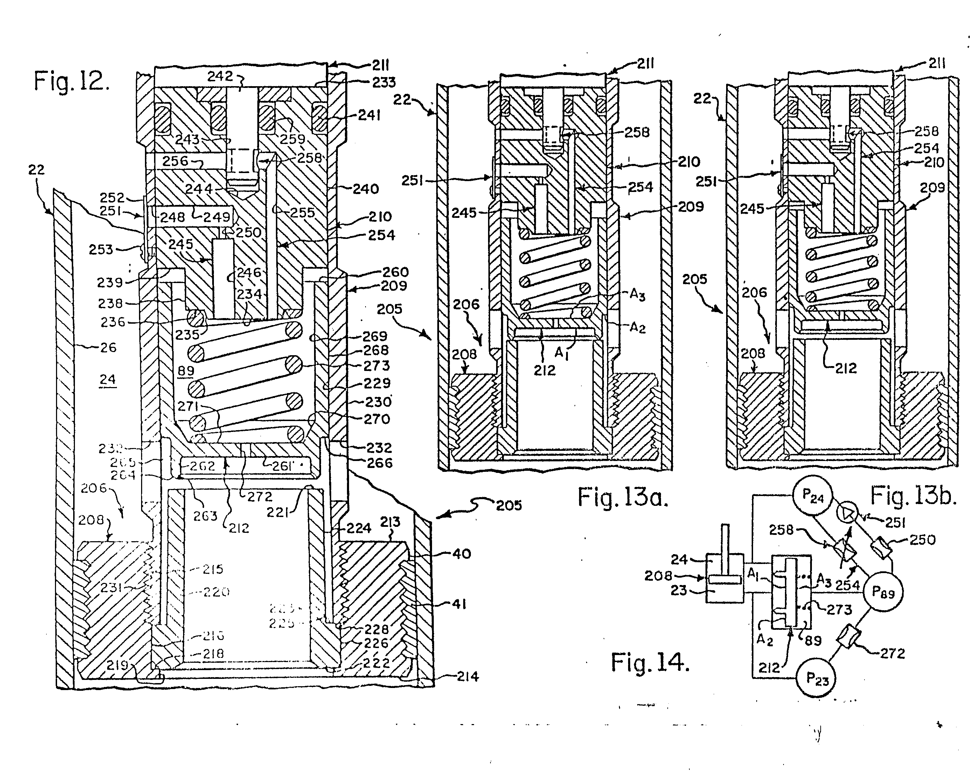

This application discloses four separate species of the invention. The purpose of this is to illustrate some, but not necessarily all, varied implementations thereof, and thereby to appreciate the breadth of the invention. , The first species is disclosed in Figs. 1-4, the second in Figs. 5-8, the third in Figs. 9-11, and the fourth in Figs. 12-14. The structure and operation of these several species will be described separately.


First Embodiment (Figs. 1-4)

Referring now to Fig. 1, a fragmentary portion of the shock absorber, generally indicated at 20, is shown as having a piston-like member 21 mounted for vertical sliding movement within a vertically-elongated cylindrical enclosure 22. In the conventional manner, the upper marginal end portion (not shown) of member 21 is adapted to be connected to a first mass (not shown), such as the body of a vehicle, while the lower marginal end portion (not shown) of enclosure 22 is adapted to be connected to a second mass (not shown), such as a pivotally-mounted control arm carrying a road wheel at its distal end. Cylindrical enclosure 22 is entirely filled with a suitable fluid (i.e., either a liquid or a gas), albeit typically oil. Thus, member 21 sealingly separates the volume within cylinder 22 into an "active" chamber 23 beneath the piston, and a "reactive" chamber 24 above the piston. These adjectival terms, "active" and "reactive", are used solely for the purpose of identification, and should not be construed as necessarily indicating the magnitude of a pressure, or a particular location or arrangement. Since the entire cylinder is filled with fluid, chambers 23,24, as well as all passageways through the piston (as described infra) are also completely filled with fluid.

Member 21 is shown as broadly including a lowermost head 25 mounted for vertical sliding movement along the inwardly-facing vertical cylindrical wall 26 of enclosure 22, a body 28 mounted on the head and rising axially upwardly therefrom, a coaxial tubular sleeve 29 also mounted on the head and rising vertically therefrom to surround a portion of the body in spaced relation thereto, a valve element 30 arranged within the lower marginal end portion of the body for vertical sliding movement toward and away from a seat provided on the head, and a motor 31 arranged within the sleeve and engaging the upper marginal end portion of the body.

Still referring principally to Fig. 1, the head 25 is shown as being of two-piece construction, and includes a lower circular disk-like part 32 captured and held by an in-turned annular flange 33 which depends from the outer margin of an upper part 34. The lower part 32 has upper and lower horizontal circular faces 35,36, respectively, and an annular side wall which sequentially includes an outwardly-facing vertical cylindrical surface extending downwardly from upper face 35, and a downwardly- and outwardly-facing frusto-conical surface continuing downwardly therefrom to join lower face 36.

The head upper part 34 has an annular horizontal upper face 38; a central horizontal lower face 39, from the outer margin of which annular flange 33 depends; and a cylindrical side wall surface 40 arranged to face enclosure wall 26. An annular recess extends radially into the upper part from side wall surface 40 to accommodate and hold an annular sealing ring 41, which slidably engages cylinder wall 26 and sealingly separates the space within the enclosure into the lower "active" chamber 23 therebelow and the upper "reactive" chamber 24 thereabove. The volumes of these two chambers 23,24 vary reciprocally in the sense that as one increases, the other decreases correspondingly. An axial recess is shown as extending downwardly into the head upper part. Specifically, this recess is shown as being sequentially bounded by an internally-threaded portion 42 extending downwardly from upper surface 38, an inwardly-facing cylindrical surface 43 continuing downwardly therefrom, and an upwardly-facing annular horizontal bottom surface 44. A first passageway portion, generally indicated at 45, extends between lower part face 36 and recess bottom surface 44. This first passageway portion 45 is shown as including an eccentrically-positioned hole 46 extending between lower part faces 36,35, and a vertically-aligned hole 48 continuing upwardly therefrom and extending between upper part faces 39 and recess surface 44. A somewhat J-shaped second passageway portion, generally indicated at 49, extends between upper part face 38 and the head recess. Specifically, this second passageway portion sequentially includes an eccentrically-positioned hole 50 extending downwardly from head upper face 38 so as to communicate with the head lower part 32, a horizontal passageway 51 extending leftwardly therefrom, and a hole 52 extending vertically upwardly therefrom through an axial tubular collar 53 which extends upwardly beyond recess bottom surface 44. The annular horizontal upper surface of this collar provides a seat 54 for valve element 30. Persons skilled in this art will appreciate that the head is formed sectionally only for manufacturing convenience in providing the internal second passageway portion 49, but could be formed integrally or otherwise if so desired.

Body 28 is shown as being a specially-configured member having annular horizontal upper and lower faces 55,56, respectively, and an outwardly-facing side surface, coaxial with collar 53 and enclosure wall 26, which sequentially includes (from top to bottom in Fig. 1): a cylindrical surface 58 depending from upper face 55, a downwardly- and outwardly-facing frusto-conical surface 59, a cylindrical surface 60, an upwardly- and outwardly-facing frusto-conical surface 61, and a cylindrical surface 62 continuing downwardly therefrom to join lower face 56. Body lower face 56 is shown as abutting the bottom surface 44 of the head portion recess. A relatively large diameter stepped recess extends axially upwardly into the body. The recess is sequentially bounded by (from bottom to top in Fig. 1): an inwardly-facing cylindrical surface 63 extending upwardly from lower face 56, a downwardly-facing annular horizontal surface 64, a cylindrical surface 65 continuing upwardly therefrom, a downwardly-facing annular horizontal bottom surface 66, an outwardly-facing cylindrical surface 68 extending downwardly therefrom, and a downwardly-facing central horizontal circular surface 69. Thus, this body recess forms together with the head recess, an internal cavity within member 21, which recess communicates with the lower "active" chamber 23 via first passageway portion 45, and which also communicates with the upper "reactive" chamber 24 via second passageway portion 49. A smaller diameter blind recess is shown as extending axially downwardly into the body. This recess is bounded by an inwardly-facing cylindrical surface 70, and an upwardly-facing horizontal circular bottom surface 71.

First and second pilot passageways, generally indicated at 72,73 respectively, communicate the body lower recess bottom surface 66 with the annular space 74 between the body and the inwardly-facing cylindrical surface of sleeve 29. Space 74 communicates with "active" chamber 23 via first passageway portion 45. The first pilot passageway 72 sequentially includes: an eccentrically-positioned relatively large diameter hole 75 drilled upwardly into the body from recess surface 66, a smaller diameter hole 76 continuing upwardly therefrom, and a horizontal hole 78 extending leftwardly from body outer surface 60 and penetrating hole 70 to communicate with hole 76. A check valve 79 is arranged in hole 75 so as to permit fluid flow from space 74 into the body recess, but to prevent fluid from flowing reversely from the body recess into space 74. In the conventional manner, this check valve assembly includes: an uppermost ball arranged to engage a downwardly- and inwardly-facing frusto-conical seat surface provided between surfaces 75,76; a lowermost retaining ring suitably held within the lower marginal end portion of hole 75; and an intermediate coil spring compressed between the ball and the retaining ring for continuously urging the ball to move upwardly into fluid-tight sealing engagement with its seat. The second pilot-passageway 73 is shown as including: ·an eccentrically-positioned relatively large diameter hole 80 drilled upwardly into the body from recess surface 66, a smaller diameter hole 81 continuing upwardly therefrom, and a horizontal hole 82 extending rightwardly from body outer surface 60 and penetrating hole 70 to communicate with hole 81. A check valve assembly 83 is operatively arranged in hole 80 to permit fluid flow from the body recess to annular space 74, but to prevent reverse flow from space 74 into the body recess. This check valve includes a lowermost seating ring secured within the lower marginal end portion of hole 80, and intermediate ball, and an uppermost spring acting between the body and ball for continuously urging the ball to move downwardly into fluid-tight sealing engagement with the seating ring. Thus, because of the opposite orientation of check valves 79,83, fluid is constrained to flow from the internal cavity to space 74 by passing through the second pilot passageway 73, and to flow from space 74 into the cavity by passing through the first pilot passageway 72.

The tubular sleeve 29 is fragmentarily illustrated as having a vertically-elongated portion surrounding the body in spaced relation thereto, and as having its lower marginal end portion secured to the head 25. Specifically, sleeve 29 has an inwardly-facing cylindrical surface 84 arranged in spaced facing relation to the body outer surface, an annular horizontal lower face 85 abutting head recess bottom surface 44, and a stepped outer surface which includes an externally-threaded portion 86 in mating engagement with the internally-threaded portion 42 of the head.

In this embodiment, valve element 30 is shown as being a poppet-like member slidably mounted within the body lower recess, and sealingly subdividing the cavity formed between the body and head into a lower or first chamber 88 therebelow, and an upper or second chamber 89 thereabove. A central recess extends axially downwardly into the poppet from its annular horizontal upper face 90. This upper recess is shown as being bounded by: an inwardly-facing cylindrical surface 91 extending downwardly from upper face 90, and an upwardly-facing annular horizontal bottom surface 92. The lower face of the poppet is specially configured and sequentially includes, in pertinent part: a central downwardly-facing annular horizontal surface 93, an inwardly-facing cylindrical surface 94 extending downwardly therefrom, a downwardly- and inwardly-facing frusto-conical surface 95, a downwardly- and outwardly-facing frusto-conical surface 96, and a downwardly-facing annular horizontal surface 98. Frusto-conical surfaces 95,96 intersect to define a downwardly-facing annular knife-edge 99 on the poppet. The upper and lower faces of the poppet are joined by an outwardly-facing cylindrical side wall surface 100 arranged to slidably engage body surface 63. An annular recess extends radially into the poppet from side wall surface 100 to accommodate the presence of a seal, shown as being an O-ring 101, which slidably engages surface 63 and sealingly separates the first and second chambers 88,89. The poppet is further shown as including a small diameter vertical through-hole or first restricted orifice 102, of constant cross-sectional area, extending between poppet surfaces 92 and 93. Thus, the first and second chambers 88,89 continuously communicate with one another through fixed orifice 102. In this embodiment, a coil spring 103 is arranged in the second chamber 89 to continuously bias the poppet to move downwardly relative to the body so that knife-edge 99 will sealingly engage seat 54. The upper marginal end portion of spring 103 encircles body surface 68 and acts against body surface 66, while its lower marginal end portion is received in the poppet upper recess and bears against recess bottom surface 92. When the poppet has been displaced off its seat, as described infra, the "active" and "reactive" chambers will communicate with one another directly via a main passageway which includes the first passageway portion 45, the first chamber 88, and the second passageway portion 49. On the other hand, when the poppet knife-edge sealingly engages seat 54, the main passageway will be closed.

Motor 31 is shown as being arranged within tubular sleeve 29, and as having its annular horizontal lower face 104 abutting body upper face 55. This motor has a tubular output shaft 105 extending vertically downwardly from its lower face 104 and arranged within the body upper recess defined by surfaces 70,71. The outwardly-facing cylindrical surface 106 of shaft 105 is arranged to closely face body hole surface 70. Motor 31 may possibly be of the type disclosed in pending U.S. Patent Application Serial No. 06/537,109, filed September 29, 1983, and entitled "Electro-Mechanical Actuator", the aggregate of which is hereby incorporated by reference insofar as the structure and operation of the motor is concerned. Suffice it to say here that, from a functional point-of-view, motor 31 is a device for selectively varying the vertical position of output shaft 105 relative to the body in response to an electrical signal supplied to the motor. Proximate its intersection with hole 82, the output shaft is provided with a leftward large diameter radial through-hole 108, and with a diametrically-opposite rightward smaller diameter radial through-hole 109. Holes 108,109 are arranged to be selectively aligned, either wholly or partially, with body hole 82 at various operative positions of the output shaft relative to the body, as described infra. The extent to which small diameter hole 109 overlaps hole 82 defines a restricted orifice 110 of variable cross-sectional area. Similarly, proximate its intersection with hole 78, the output shaft is provided with a rightward relatively large diameter radial

-12-

through-hole 111, and with a diametrically-opposite leftward relatively small diameter radial through-hole 112. Here again, holes 111,112 are arranged to be selectively aligned, either wholly or partially, with body hole 78 at various operative positions of the output shaft relative to the body. The extent to which small diameter hole 112 overlaps hole 78 defines another restricted orifice 113, also of variable cross-sectional area. The respective cross-sectional areas of these first and second restricted orifices 113,110 depend upon the vertical position of the output shaft relative to the body. The first pilot passageway 72 includes the first restricted orifice 113, and the second pilot passageway 73 includes the second restricted orifice 110.

As previously stated, the cross-sectional area of the first restricted orifice 113 is determined by the vertical position of the output shaft relative to the body. For example, in Fig. 3a, the output shaft is depicted as being in an upper position relative to the body, such that the entire cross-sectional area of output shaft hole 112 is uncovered and exposed. Fig. 3b illustrates another situation where the output shaft has been moved downwardly from the position shown in Fig. 3a, such that a fractional portion of hole 112 remains exposed. Fig. 3c illustrates a situation wherein the output shaft has been moved further downwardly from the position shown in Fig. 3b, such that a still smaller or minor fractional portion of hole 112 remains uncovered. In other words, the first restricted orifice 113 has the greatest cross-sectional area in Fig. 3a, a smaller cross-sectional area in Fig. 3b, and a still smaller cross-sectional area in Fig. 3c. Thus, the exposed or uncovered cross-sectional areas of restricted orifices 110,113 vary with the vertical position of the output shaft relative to the body. The cross-sectional areas of the two variable orifices need not necessarily be the same for any position of the output shaft relative to the body. Indeed, either or both of these orifices may be suitably tailored, such as by hole shaping or the like, so as to provide the desired uncovered cross-sectional area at any selected position of the output shaft relative to the body. If desired, the output shaft could be of two-piece construction, with a screw thread connection between the two sections, such that the vertical spacing between the holes 109,112 can be selectively varied to provide different performance characteristics depending upon the polarity of a pressure differential between the "active" and "reactive" chambers. The invention also contemplates the possibility that either or both of these variable orifices may be completely closed, such as by having holes 112 or 109 completely covered, to block flow through the associated pilot passageway.

The operation of this first embodiment is comparatively illustrated in Figs. 2a and 2b. Spring 103 continuously urges poppet 30 to move downwardly toward its seat. When the knife-edge 99 of the poppet has sealingly engaged seat surface 54 so as to block flow through the main passageway, the pressure, $P_{23}$, of fluid in the lower "active" chamber 23 will be present in first passageway portion 45, and will act against the downwardly-facing projected annular area, of cross-sectional area $A_1$, of the poppet between the knife-edge 99 and body surface 63. This "active" pressure, $P_{23}$, acting on such projected annular area, $A_1$, of the poppet, will create a first force (i.e., $F_1 = P_{23} \cdot A_1$) acting upwardly on the poppet. The pressure, $P_{24}$, of fluid in the upper "reactive" chamber will also be present in the second passageway portion 49, and will act on the downwardly-facing annular area of cross-sectional area, $A_2$, of the poppet between knife-edge 99 and fixed orifice 102. This "reactive" pressure, $P_{24}$, acting on this second area, $A_2$, will create a second force (i.e., $F_2 = P_{24} \cdot A_2$) which also acts upwardly on the poppet. These two forces will be opposed by forces acting downwardly on the poppet and attributable to the compression of spring 103 (i.e., $F_s = kx$), and the pressure, $P_{89}$, in the second chamber 89 acting on the entire upper surface, of cross-sectional area $A_3$, of the poppet (i.e., $F_3 = P_{89} \cdot A_3$), and the gravita-

-14-

tional weight of the poppet. In this regard, persons skilled in this art will appreciate that, when the knife-edge 99 sealingly engages seat 54, the stationary collar 53 will exert an upward reaction force on the poppet. Of course, in any static position of the poppet, the sum of the faces acting upwardly and downwardly on the poppet must equal zero.

In this embodiment, it should be noted that when the poppet engages seat 54, as shown in Fig. 2a, the main passageway through the head will be blocked so as to prevent direct communication between the first and second passageway portions 45,49. However, the "reactive" and second chambers 24,89 will be in continuous communication with one another through fixed orifice 102, while the second and "active" chambers 89,23 will be in continuous communication through one of the first and second pilot passageways.

If the pressures in the "active" and "reactive" chambers, $P_{23}$, $P_{24}$, have been equal to one another for a period of time, the pressure in the second chamber, $P_{89}$, will have equalized with this pressure. However, if the pressure in the lower "active" chamber 23 were to rise quickly (as by a roadwheel hitting a bump), such quickly-increased "active" pressure, $P_{23}$, acting on annular area $A_1$, may create a force sufficient to displace the poppet upwardly off its seat, to open the main passageway and permit large flow from the "active" chamber to the "reactive" chamber directly through the main passageway, as shown in Fig. 2b. The reason for this is that the first and second variable restricted orifices 113,110 will not permit the pressure in the second chamber, $P_{89}$, to rise as quickly as that experienced in the "active" chamber. Alternatively, if the pressure in the "reactive" chamber 24 were to rise quickly, this rapidly-increased "reactive" pressure, $P_{24}$, acting on annular area $A_2$, might also create a force sufficient to displace the poppet upwardly off its seat, again allowing large flow communication between the "reactive" and "active" chambers through the main passageway. Such a rapid increase in the pressure in the "reactive" chamber, $P_{24}$, will not produce a corresponding immediate increase in the pressure in the second chamber, $P_{89}$, because of the restrictive effect of fixed orifice 102. Of course, when fluid has flowed through the main passageway from one of the "active" and "reactive" chambers to the other so as to relieve the rapid pressure increase, the resultant of the forces acting on the poppet will urge it downwardly so as to again engage seat 54 and close the main passageway, as shown in Fig. 2a.

Fig. 4 is a hydraulic schematic diagram of the damping mechanism shown in Fig. 1. The pressures in the "active" and second chambers, $P_{23}$, $P_{89}$, are in continuous communication with one another via the first pilot passageway 72, which includes check valve 79 and first restricted orifice 113, and via the second pilot passageway 73, which includes check valve 83 and second restricted orifice 110. Check valves 79, 83 are arranged oppositely so that if $P_{23}$ is greater than $P_{89}$, fluid may only flow through the first pilot passageway, whereas if $P_{89}$ is greater than $P_{23}$, fluid may only flow through the second pilot passageway. As previously noted, the cross-sectional areas of variable orifices 110,113 may be varied by changing the position of output shaft 105 relative to body 28, so that a vehicle may experience different bound and rebound characteristics. The second chamber pressure, $P_{89}$, continuously communicates with the pressure in the "reactive" chamber pressure, $P_{24}$, via fixed orifice 102. When a rapid pressure increase displaces poppet 30 off its seat, the "active" and "reactive" chambers will communicate directly through the main passageway. However, when poppet 30 engages its seat so as to close the main passageway, the "active" and "reactive" chambers still communicate with one another through one of the pilot passageway portions. If $P_{24}$ is greater than $P_{89}$ and $P_{23}$, fluid may flow from "reactive" chamber 24 through fixed orifice 102 to enter second chamber 89, and then flow from second chamber 89 via second pilot passageway 73 to annular space 74 and "active" chamber 23. Alternatively, if $P_{23}$ is greater than $P_{89}$ and $P_{24}$, fluid in "active" chamber 23 and annular space 74 may flow through the first pilot passageway portion to enter second chamber 89, and then flow via fixed orifice 102 to the "reactive" chamber 24.

Thus, the performance characteristics of each shock absorber 20 may be varied at will, either manually or automatically in response to one or more sensed parameters. For example, the vehicle may be provided with a suitable selector switch which permits the driver to select the degree of "stiffness" or "softness" desired. If a "stiff" ride was desired, the operator would move the switch so that motor 31 would displace its output shaft to the position shown in Fig. 3a. Alternatively, if a "soft" ride was desired, the operator would move the selector switch so that the motor would move output shaft 105 to, say, the position shown in Fig. 3c. In another implementation, the operation of the motor may be automatically responsive to the magnitude of, or variation in, a sensed parameter. This may be either a closed-loop or an open-loop servosystem, as desired. For example, the signals applied to the motor might be generated by an accelerometer or some other instrument. Each shock absorber would be controlled individually. Thus, such accelerometers could sense when the vehicle was cornering or braking from the attitude of the body, and "stiffen" any shock absorber(s) positioned on the front, rear or side of the vehicle to which the body was leaning. If desired, motor 31 could be eliminated and the position of shaft 105 adjusted manually. It should also be noted that orifices 110,113 need not necessarily be of the same cross-sectional area. In other words, the shock absorber 20 may be designed so as to have different damping characteristics on its "bound" and "rebound" strokes.

## Second Embodiment (Figs. 5-8)

Since much of the structure of the second embodiment is common to the first embodiment, the same reference numerals will be used wherever possible to describe analogous portions, elements or surfaces, with new reference numerals being reserved for newly-described structure.

Referring now to Fig. 5, a fragmentary portion of second embodiment of the shock absorber, generally indicated at 115, again includes a piston-like member 116 mounted for vertical sliding movement within enclosure 22, and separating an "active" chamber 23 therebelow from a "reactive" chamber 24 thereabove.

In this embodiment, member 116 includes a lowermost head 118 which, except for differences in proportion and degree, is, from a functional point-of-view, substantially similar to the head 25 of the first embodiment. The principal difference is that the upper recess of head 118 includes an upwardly-facing annular horizontal shoulder surface 119 between internally-threaded portion 42 and recess annular bottom surface 44.

The body 120 includes upper and lower horizontal annular faces 55,56, as before, but the outer surface is configured somewhat differently. Specifically, the body outer surface sequentially includes (from top to bottom in Fig. 5): an outwardly-facing cylindrical surface 121 depending from upper face 55, an annular recess or groove extending radially into the body, an externally-threaded portion 122, a downwardly-facing annular horizontal surface 123, an outwardly-facing cylindrical surface 124, an upwardly-facing annular horizontal surface 125, and an externally-threaded portion 126 continuing downwardly therefrom to join lower face 56. Body threaded portion 126 is shown as being in mating engagement with head threaded portion 42. An annular recess extends radially into the body adjacent its upper face 55 to receive and accommodate an O-ring 128, by which the joint between the body and sleeve may be sealed. In this second embodiment, the recess extending upwardly into the body is bounded by a downwardly- and inwardly-facing frusto-conical surface 129 extending away from lower face 56, and a downwardly-facing horizontal circular bottom surface 130. Moreover, the L-shaped first and second pilot passageways 72,73, each incorporating its associated check valve 79,83, respectively, are shown as extending between recess bottom surface 130 and body outer surface 124 so as to communicate the second chamber 89 with the annular space 74 between the body and sleeve. The upper recess is shown as extending further downwardly into body than in the first embodiment. This axial recess is bounded by an inwardly-facing cylindrical surface 131, and an upwardly- and inwardly-inclined conical bottom surface 132. Moreover, an annular corner recess extends into the body adjacent the intersection of upper face 55 with recess surface 131 to accommodate the presence of a seal, shown as being an O-ring 133, which seals the output shaft to the body.

The tubular sleeve 134 is shown as having an inwardly-facing cylindrical surface 135 arranged to face the motor and body surface 121 and be engaged by O-ring 128, an internally-threaded portion 136 in mating engagement with body threads 122, and an inwardly-facing cylindrical surface 138 continuing downwardly therefrom to join annular lower face 139. Sleeve surface 138 is arranged in spaced facing relation to body surface 124 so as to define space 74 therebetween. A plurality of horizontal radial through-holes, severally indicated at 140, penetrate the sleeve adjacent its lower face so as to communicate space 74 with "reactive" chamber 24.

Another difference is that the valve element is in the form of a diaphragm 141 having a vertically-thickened central portion 142 arranged for movement toward and away from seat 54, and an annular flexible portion 143 extending radially outwardly therefrom. The annular outer marginal end portion of this flexible portion is captured and held compressively between head surface 119 and body lower face 56 when the member is assembled, as shown. Thus, diaphragm 141 sealingly subdivides the cavity formed between the body and head into a lower first chamber 88 and an upper second chamber 89. Moreover, the diaphragm is formed of a resilient material and is integrally biased to move to a normally-closed position against seat 54. While not specifically shown, this integral biasing could be replaced or supplemented by a suitable spring or resilient member, as in the first embodiment, if desired. In this form, the central portion 142 of the diaphragm is imperforate so as to isolate the second chamber 89 from the "reactive" chamber 24 when the diaphragm sealingly engages seat 54, while an eccentrically-positioned leftward fixed orifice 144 is provided through the diaphragm flexible portion above first passageway portion 45.

Whereas the motor of the first embodiment was arranged to selectively displace its output shaft upwardly and downwardly relative to the body, the motor 145 of the second embodiment is operatively arranged to selectively rotate its output shaft 146 in either angular direction to a desired position relative to body 120. Motor 145 may be any type of device, such as a stepping or brushless motor, which is capable of selectively rotating shaft 146 to a desired angular position relative to the body. Output shaft 146 is again a tubular member having its outwardly-facing cylindrical surface 148 arranged to closely face body surface 131, and be engaged by O-Ring 133. Output shaft 146 is provided with one diametrical through-hole 149 proximate body hole 82, and with another parallel diametrical through-hole 150 proximate body hole 78. The extent to which output shaft hole 150 is uncovered or exposed by body hole 78 defines a first restricted orifice 151, of variable cross-sectional area, within the first pilot passageway portion 72. Similarly, the extent to which output shaft hole 149 overlaps body hole 82 defines a second restricted orifice 152, also of variable cross-sectional area, within the second pilot passageway portion 73.

As best shown in Fig. 7a, the output shaft 146 may be rotated to an angular position at which shaft hole 150 will be wholly aligned with body hole 78 so that the cross-sectional area of orifice 151 will be substantially equal to the cross-sectional area of hole 150. Alternatively, the output shaft may be rotated to another position at which a fractional portion of shaft hole 150 is aligned with body hole 78, as shown in Fig. 7b. This represents a situation at which the cross-sectional area of orifice 150 has been reduced from that shown in Fig. 7a. Referring now to Fig. 7c, the ouput shaft may be further rotated in the same angular direction so as to further decrease the cross-sectional area of orifice 151. In Figs 7a-7c, it would appear that the rotational axis of shaft 146 is exactly coincident with the axes of diametrical holes 149,150, such that identical restricted orifices would appear to be provided at the opposite ends of holes 149,150. However, this situation will not obtain, as a practical matter, due to the inability to have these axes be perfectly coincident with one another. If desired, either or both of holes 149,150 may be separately provided by drilling diametrically-opposite radial through-holes of different diameters, as in the first embodiment. The point of this is simply that, as a practical matter, only one restricted orifice is provided in each of the pilot passageway portions. As with the first embodiment, this second embodiment also contemplates the possibility that the output shaft may be moved to an angular position at which either or both of the restricted orifices will be closed, thereby to isolate the "active" and "reactive" chambers, if desired.

The operation of the second embodiment is comparatively illustrated in Figs. 6a and 6b. As previously noted, the diaphragm is integrally biased to move downwardly to engage seat 54 and close the main passageway. In this condition, the "ac-

tive" chamber pressure $P_{23}$, will exist in the first pilot passageway portion 45, and will be applied against the downwardly-facing annular surface, of cross-sectional area $A_1$, of the diaphragm between seat 54 and body surface 129. Similarly, the "reactive" chamber pressure $P_{24}$, will exist in the second passageway portion 49, and will be applied against the downwardly-facing circular surface, of cross-sectional area $A_2$, of the diaphragm within seat surface 54. Both of these pressures, acting against the respective areas to which they are exposed, will create upward forces which urge the diaphragm central portion 142 to move upwardly off seat 54. These upward forces will be opposed by downward forces attributable to the second chamber pressure $P_{89}$, acting against the entire upper surface of the diaphragm, of cross-sectional area $A_3$, as well as the integral downward bias of the diaphragm, or any supplemental force acting thereon. When the diaphragm central portion 142 sealingly engages seat 54, the main passageway through the member will be closed. Even in this condition, fluid may pass between the "active" and "reactive" chambers by passing through the fixed orifice 144 and one of the variable orifices 151,152. Specifically, if $P_{23}$ is greater than $P_{89}$ and $P_{24}$, fluid may flow from "active" chamber 23 into the first passageway portion 45, then through fixed restricted orifice 144 into second chamber 89, and then via the second pilot passageway 73 to annular space 74, which communicates with the "reactive" chamber via holes 140. Conversely, if $P_{24}$ is greater than $P_{89}$ and $P_{23}$ fluid may flow from "reactive" chamber 24 into space 74, and then through the first pilot passageway 72 and into the second chamber, and then through restricted orifice 144 and first pilot passageway portion 45 to enter "active" chamber 23.

The operation of the second embodiment is similar to that of the first embodiment in that a rapid increase of either the "active" chamber pressure, $P_{23}$, or the "reactive" pressure chamber, $P_{24}$, may be sufficient to displace diaphragm 141 off its seat, as shown in Fig. 6b, and to allow flow through the main passageway. Such a rapid pressure rise in either $P_{23}$ or $P_{24}$ will not produce a corresponding immediate rise in $P_{89}$ because of the effect of the fixed orifice 144 and/or the operative variable orifice 151,152. After such pressure spike has been relieved, the diaphragm will again return to its closed position, as shown in Fig. 6a.

Fig. 8 illustrates a hydraulic schematic of the second embodiment. The "active" chamber pressure, $P_{23}$, continuously communicates with the second chamber pressure, $P_{89}$, via fixed orifice 144. If $P_{89}$ is greater than $P_{24}$, fluid may flow from second chamber 89 to "reactive" chamber 24 via the second pilot passageway 73, which includes check valve 83 and restricted orifice 152. On the other hand, if $P_{24}$ is greater than $P_{89}$, fluid may flow from "reactive" chamber 24 to second chamber 89 via the first pilot passageway 72, which includes restrictied orifice 151 and check valve 79.

Here again, the operation of motor 145 may be responsive to a selected vehicle condition, or automatically responsive to a sensed parameter. If desired, output shaft 146 may be formed sectionally so that each restricted orifice may be tailored to provide the desired performance characteristics.

Third Embodiment (Figs. 9-11)

Here again, much of the structure of the third embodiment is common to the corresponding structure of the first or second embodiments, previously described. Hence, the same reference numerals will be used, wherever possible, to identify previously-described structure, with additional reference numerals being reserved for newly-described structure.

Referring now to Fig. 9, a fragmentary portion of a third embodiment of the         shock absorber, generally indicated at 155, again includes a piston-like member 156 mounted for vertical sliding movement within enclosure 22, and separating "active" chamber 23 therebelow from "reactive" chamber 24 thereabove. Member 156 is shown as including a head 158 which is substantially similar to head 25 of the first embodiment, a coaxial body 159 mounted on the head and rising upwardly therefrom, a coaxial tubular sleeve 160 rising upwardly from the head and surrounding a portion of body 159 in spaced relation thereto, and a valve element 161 in the form of a cup-shaped piston.

The principal difference, other than dimensions, between head 158 and head 25 is that in the third embodiment, that portion of the collar which projects upwardly into the first chamber 88 is shown as having an upwardly-facing annular knife-edge surface 162.

Body 159 again has annular horizontal upper and lower faces 55,56, respectively. Body lower face 56 is shown as abutting head recess bottom surface 44. A coaxial recess extends upwardly into the body. This recess is shown as being specifically bounded by (from bottom to top in Fig. 9): an inwardly-facing cylindrical surface 163 rising vertically from lower face 56, a downwardly-facing annular horizontal surface 164, an inwardly-facing cylindrical surface 165, and a downwardly-facing circular bottom surface 166. Another coaxial recess extends downwardly into the body from its upper face 55. This body upper recess is bounded by an inwardly-facing vertical cylindrical surface 168, and an upwardly- and inwardly-facing conical bottom surface 169. The body has an outer surface which includes (from top to bottom in Fig. 9): an annular recess 170 extending radially into the body adjacent upper face 55, an externally-threaded portion 171 continuing downwardly therefrom, a cylindrical surface 172, an upwardly- and outwardly-facing frusto-conical surface 173, a cylindrical surface 174, an upwardly-facing annular horizontal surface 175, and an externally-threaded portion 86 continuing downwardly therefrom to join lower face 56. In this embodiment, the second pilot passageway 73 differs somewhat in that hole 82 extends between recess 170 and hole 81, and an inclined hole 176 extends between hole 82 to communicate the second pilot passageway with the annular space 74 between the body and sleeve. The first and second pilot passageways 72,73 contain their respective check valves 79,83, as previously described.

The sleeve 160 is illustrated fragmentarily as having an annular lower face 177 abutting body surface 175, and as having an inwardly-facing surface which sequentially includes (from top to bottom in Fig. 9): a cylindrical surface 178 arranged to face the motor, a downwardly- and inwardly-facing frusto-conical surface 179 arranged to face into body recess 170, an internally-threaded portion 180 in mating engagement with body threads 171, a downwardly-facing annular horizontal surface 181, and a cylindrical surface 182 continuing downwardly therefrom to join sleeve lower face 177. Adjacent its lower face, the sleeve is shown as being provided with a plurality of radial through-holes, severally indicated at 183, to allow fluid in the "reactive" chamber 24 to enter the annular space 74 between sleeve surface 182 and body surfaces 172,173,174.

The valve element 161 is shown as being in the form of a cup-shaped piston member slidably mounted within the body lower recess for vertical sliding movement toward and away from knife-edge 162. This piston-like member 161 has an annular upper face 184; and a lower face which includes a downwardly-facing central circular horizontal seat surface 185 arranged above knife-edge 162, an outwardly-facing vertical cylindrical surface 186, and a downwardly-facing annular horizontal surface 188 continuing radially outwardly therefrom. The upper and lower faces of member 161 are joined by an outwardly-facing vertical cylindrical side wall surface 189. A plurality of vertically-spaced annular recesses are shown as extending radially into member 161 from its outer surface 189. The inner surface of member 161 is bounded by (from top to bottom in Fig. 9): an inwardly-facing vertical cylindrical surface 190 extending downwardly from upper face 184, an upwardly-facing annular shoulder surface 191, an annular concave surface 192 continuing downwardly therefrom, and an upwardly-facing circular bottom surface 193. A fixed orifice 194, of constant cross-sectional area, is provided through member 161 so as to communicate the intersection of surfaces 186,188 with the intersection of surfaces 192,193.

An annular bearing member, generally indicated at 195, is shown as being provided in the lower body recess so as to abut recess bottom surface 166. This bearing member 195 has, in pertinent part, a downwardly-facing annular horizontal surface 196.

A washer-like element 198 is shown as being arranged within member 161 so as to abut surface 191. A coil spring 199 has its upper marginal end portion arranged to bear against bearing member surface 196, and has its lower marginal end portion arranged to bear against washer-like element 198, and is arranged to continuously urge member 161 to move downwardly such that its lowermost seat surface 185 will sealingly engage knife-edge 162 (as shown in Fig. 10a), and thereby close the main passageway.

The motor 200 of the third embodiment is generally similar to the motor of the second embodiment, and has a rotatable output shaft 201 depending therefrom and arranged within body upper hole 168. As with the second embodiment, motor 200 is arranged to selectively move output shaft 201 in either angular direction relative to the body to vary the cross-sectional areas of a first restricted orifice 202 arranged in the first pilot passageway portion and a second restricted orifice 203 arranged in the second pilot passageway portion. Here again, the operation of motor 200 may be either manually or automatically controlled, as desired.

Referring now to Figs. 10a and 10b, pressure in the "active" chamber 23 will also exist in the first passageway portion 45 and will act on the projected annular area, of cross sectional area $A_1$, of member 161 between knife-edge 162 and surface 189. Pressure of fluid in the "reactive" chamber 24 will also exist in the second passageway portion 49 and will act against that portion of seat surface 185 which is within knife-edge 162. Such portion has a projected circular cross-sectional area $A_2$. Both of these pressures, acting on their effective areas, will create forces on member 161 which urge it to move upwardly off its seat. These forces will be opposed by downward forces acting on member 161, of cross-sectional area $A_3$, and attributable to the pressure in second chamber 89 acting across the entire projected upper surface of member 161, and the compressive effect of spring 199.

As with the second embodiment, if the "active" chamber pressure, $P_{23}$, rises quickly, the force attributable to this pressure, will also be increased. This may have the effect of displacing the piston-like member 161 upwardly off its seat, as shown in Fig. 10b. In this event, the main passageway, which includes first passageway portion 45, first chamber 88, and second chamber 49 will be open to allow fluid flow directly through head 158. Conversely, if the "reactive" chamber pressure, $P_{24}$, were to rise rapidly, such increased pressure might also create a sufficient upward force on member 161 to displace it off its seat, thereby opening the main passageway. However, even when member 161 has moved downwardly relative to the body so as to engage its seat 162, as shown in Fig. 10a, if $P_{23}$ is greater than $P_{89}$ and $P_{24}$, fluid may flow from the "active" chamber through first passageway 45 to enter annular first chamber 88, then flow through fixed orifice 194 to enter the second chamber 89, then

27

flow through the second pilot passageway portion 73 to enter the annular space 74 between the body and sleeve. Of course, this space 74 communicates with the "reactive" chamber via holes 183. Conversely, if $P_{24}$ is greater than $P_{89}$ and $P_{23}$, fluid may flow from the "reactive" chamber through holes 183 to enter space 74, and then flow through the first pilot passageway portion 72 to enter second chamber 89, and then flow through fixed orifice 194 to enter first chamber 88, and pass through first passageway portion 45 to enter "active" chamber 23.

Fig.11 is a hydraulic schematic diagram of the third embodiment. This figure illustrates that $P_{23}$ and $P_{89}$ continuously communicate with one another through fixed orifice 194. Moreover, $P_{89}$ continuously communicates with $P_{24}$ through one of the first and second pilot passageway portions 72,73. If $P_{89}$ is greater than $P_{24}$, fluid may flow from second chamber 89 to "reactive" chamber 24 by passing through check valve 83 and variable orifice 203. Conversely, if $P_{24}$ is greater than $P_{89}$, fluid may flow from the "reactive" chamber to second chamber 89 by passing through check valve 79 and second variable orifice 202.

Fourth Embodiment (Figs. 12-14)

Referring now to Fig. 12, a fourth embodiment of the shock absorber, generally indicated at 205, is again shown fragmentarily as including a piston-like member 206 mounted for vertical sliding movement within cylindrical enclosure 22. Member 206 has a head 208, a coaxial tubular sleeve 209 mounted on the head and extending upwardly therefrom, a body 210 mounted within an upper portion of the sleeve, a motor 211 mounted within the sleeve above the body, and a cup-shaped piston element 212 mounted for vertical sliding movement within the sleeve between the body and head.

In this form, head 208 has annular horizontal upper and lower faces 213, 214, respectively, and an outwardly-facing side wall cylindrical surface 40 arranged to face enclosure wall 26. The head is shown as being a somewhat tubular member, and has an inwardly-facing surface which sequentially includes (from top to bottom in Fig. 12): an internally-threaded portion 215 extending downwardly from upper face 213, a cylindrical surface 216 continuing downwardly therefrom, an upwardly-facing annular horizontal surface 218, and a cylindrical surface 219 continuing downwardly therefrom to join lower face 214. In this form, the collar 220 is shown as being a vertically-elongated tubular member having annular horizontal upper and lower faces 221, 222, respectively. These two faces are joined by an inwardly-facing vertical cylindrical surface 223, and by an outer surface which sequentially includes a vertical cylindrical surface 224 extending downwardly from upper face 221, an upwardly-facing annular horizontal surface 225, and a vertical cylindrical surface 226 continuing downwardly therefrom to join lower face 222. The upper face 221 of collar 220 forms a seat surface, as in the first embodiment.

Sleeve 209 is shown as having an annular horizontal lower face 228, an inwardly-facing vertical cylindrical surface 229, and an outer surface which includes, in pertinent part, an intermediate vertical cylindrical surface 230 and a lowermost externally-threaded portion 231 in mating engagement with head threaded portion 215. A plurality of radial through-holes, severally indicated at 232 extend between sleeve surfaces 230,229.

Body 210 is shown as having an annular horizontal upper face 233; and as having a lower face which includes a downwardly-facing central circular surface 234, a downwardly- and outwardly-facing frusto-conical surface 235 extending upwardly therefrom, a downwardly-facing annular horizontal surface 236, an outwardly-facing

-29-

vertical cylindrical surface 238, and a downwardly-facing annular horizontal surface 239. The body upper face 233 and lower surface 239 are joined by an outwardly-facing vertical cylindrical surface 240 arranged to closely face sleeve inner surface 229. The joint between these surfaces is sealed by means of an O-ring 241 provided in an annular recess which extends radially into the body adjacent its upper face 233. A axial recess extends downwardly into the body from its upper face 233 to receive the output shaft 242 of motor 211. Specifically, this recess is bounded by an inwardly-facing vertical cylindrical surface 243, and upwardly- and inwardly-inclined conical bottom surface 244. In this form, the first pilot passageway, generally indicated at 245, is shown as including an eccentrically-positioned hole 246 extending upwardly into the body from its lower surface 234, and aligned horizontal holes 248,249 extending through the sleeve and body members, respectively. Body holes 249,246 are shown as being connected by a smaller diameter hole 250, which provides a fixed orifice. Moreover, a flapper valve, generally indicated at 251, is mounted on the outer surface of sleeve 209. This flapper valve includes a flexible member 252 mounted on the sleeve by means of a fastener 253. Flapper valve 251 functions as a one-way check valve, which permits fluid to flow from second chamber 89 through the first pilot passageway 245 to enter "reactive" chamber 24, but prevents fluid from flowing reversely from the "reactive" chamber into the second chamber. The second pilot passageway, generally indicated at 254, includes an eccentrically-positioned hole 255 drilled upwardly into the body member from its lower surface 234, and a horizontal hole 256 drilled horizontally and rightwardly through the sleeve and body so as to penetrate body upper recess 243 and intersect hole 255. As with the second embodiment, the output shaft 242 has a diametrical through-hole (not shown), and may be rotated in either angular direction relative to the body to vary the exposed cross-sectional area of a second restricted

orifice 258. An O-ring 259 is shown as being received in a corner recess of the body so as to seal the joint between the body and the output shaft.

In this embodiment, the cup-shaped piston-like member 212 has an annular horizontal upper face 260; and has a lower face which includes a downwardly-facing annular horizontal central portion 261, an inwardly-facing vertical cylindrical surface 262 extending downwardly therefrom, a downwardly- and inwardly-facing frusto-conical surface 263, a downwardly- and outwardly-facing frusto-conical surface 264, an outwardly-facing vertical cylindrical surface 265 rising upwardly therefrom, and a downwardly-facing annular horizontal surface 266 extending outwardly therefrom. Upper face 260 and lower surface 266 are joined by an outwardly-facing cylindrical surface 268 which is arranged to closely face and slidably engage sleeve inner surface 229. A large diameter recess extends downwardly into member 212. Specifically, this recess is bounded by an inwardly-facing vertical cylindrical surface 269 extending downwardly from upper face 260, an inwardly- and upwardly-facing frusto-conical surface 270, and an upwardly-facing annular horizontal surface 271. A vertical through-hole 272 communicates surfaces 261,271 to provide a fixed orifice through member 212.

The "active" chamber pressure $P_{23}$ will be present within collar 220, and will act on that portion of piston member 212, of cross-sectional area $A_1$, within the sharpened knife-edge surface defined by the intersection of surfaces 263,264. The "reactive" chamber pressure $P_{24}$, will be applied to the annular surface, of cross sectional area $A_2$, of member 212 between this knife-edge and side wall surface 229. These two pressures $P_{23}$, $P_{24}$ acting on their respective areas $A_1$, $A_2$, respectively, will exert forces on member 212 which urge it to move upwardly and away from seat surface 221. The second chamber pressure $P_{89}$ will act on the entire projected upper surface, of

cross-sectional area $A_3$, of member 212, to create a downward force on that member. Moreover, a coil spring 273 is arranged between the body and piston-like member 212. Specifically, the upper marginal end portion of this spring is arranged to abut and bear against body surface 236, while the lower marginal end portion thereof is arranged to bear against member surface 271. Spring 273 is compressed and exerts a force on the piston-like member 212, which urges it to move downwardly toward sealing engagement with seat 221. Fluid in chamber 89 may pass into the "reactive" chamber 24 by passing through the first pilot passageway 245, and by passing through the second pilot passageway 254. On the other hand, fluid may pass from the "reactive" chamber 24 into second chamber 89 only by passing through the second pilot passageway 254. The reason for this is that flapper valve 251 acts as a one-way check valve, and prevents flow from the "reactive" chamber toward chamber 89.

If either the "active" chamber pressure $P_{23}$ or the "reactive" chamber pressure $P_{24}$ should rise quickly, the increased force on member 212 may be sufficient to displace it off its seat (as shown in Fig. 13b), thereby opening a main passageway which includes the space within tubular collar 220, the chamber between the collar and the piston-like member, and holes 232, which penetrate sleeve 209 and communicate with the "reactive" chamber. On the other hand, when piston member 212 has moved downwardly to sealingly engage its seat 221 (as shown in Fig. 13a), the "active" and "reactive" chambers may still communicate via the fixed orifice 272 and one or both of the first and second pilot passageway portions, as appropriate. If $P_{23}$ is greater than $P_{89}$ and $P_{24}$, fluid may flow from the "active" chamber through collar 220 and fixed orifice 272 to enter chamber 89. If $P_{89}$ is greater than $P_{24}$, fluid may flow through both of the first and second pilot passageways 245,254 to enter the "reactive" chamber 24. On the other hand, if $P_{24}$ is greater than $P_{89}$ and $P_{23}$, fluid may flow

from the "reactive" chamber through the second pilot passageway 254 to enter chamber 89, and then flow through fixed orifice 272 to enter the "active" chamber.

Fig. 14 is a hydraulic schematic of the fourth embodiment. As shown there, $P_{23}$ continuously communicates with $P_{89}$ via fixed orifice 272. $P_{89}$ continuously communicates with $P_{24}$ via variable orifice 258. $P_{89}$ also communicates with $P_{24}$ via fixed orifice 250 and one-way flapper valve 251.

## Modifications

The illustrated embodiments demonstrate some, but not all, possible forms which the various parts and components of the invention may take. For example, the head may be configured differently, as demonstrated by the first and fourth embodiments. The valve element may take many different forms. It may be a poppet member, as in the first embodiment; a diaphragm, as in the second embodiment; a cup-shaped piston-like member, as in the third and fourth embodiments; or may take some other form. The fixed orifice may be provided through the valve element so as to communicate the second chamber with either the "active" or "reactive" chambers, as desired. The valve element may be integrally or externally biased to move toward its seat. The seat may be provided on the element or the head, as desired. The salient common feature between the various embodiments is that when the valve element engages its seat so as to close a main passageway through the member, the "active" and "reactive" chambers will still communicate with one another through a pilot stage, which comprises fixed and variable orifices in series with one another.

In another possible implementation, the cross-sectional area of the variable orifice (or another variable orifice hydraulically in series with it) may be varied as a function of the position of the member relative to either the enclosure or some other structure. This may be in addition to, or in conjunction with, or in place of, the

-33-

controlled variation of the movable orifice. Thus, with this feature, the shock absorber may stiffen or soften automatically as the attitude of the vehicle changes. For example, as the vehicle body leans during cornering, the outboard shock absorbers may stiffen automatically. Alternatively, during braking, the front shock absorbers may stiffen. This stiffening or softening as a function of the position of the member within the enclosure, may be provided by mechanical or electrical means, either independently of other control of the vehicle and/or in conjunction with it.

## CLAIMS

1.   A damping mechanism having a member (e.g.21) movably mounted within an enclosure (e.g.22), said member separating an active chamber (e.g.23) on one side thereof from a reactive chamber (e.g.24) on the other side thereof, said member being adapted to be connected to a first mass and said enclosure being adapted to be connected to a second mass, said active and reactive chambers being filled with fluid, characterised by a main passageway provided through said member so as to communicate said active and reactive chambers, said main passageway including a cavity within said member, a first passageway portion communicating said active chamber with said cavity, and a second passageway portion (e.g.45) communicating said reactive chamber with said cavity, a portion of said member about one of said passageway portions providing a seat (e.g.54) facing into said cavity, a valve element (e.g.30) mounted on said member within said cavity and subdividing said cavity into a first chamber (e.g.88) and a second chamber (e.g.89), said element having a first surface arranged to face into said first chamber toward said first and second passageway portions and having a second surface arranged to face into said second chamber, said element having a portion (e.g.99) arranged for selective movement toward and away from said seat to control the flow of fluid through said main passageway, said element portion being biased to engage said seat to normally close said main passageway; a first restricted orifice (e.g.102) provided through one of said member and element for communicating said second chamber with one of said active and reactive chambers when

35

said element portion engages said seat; and a first pilot passageway (e.g.73) provided through said member and communicating said second chamber with the other of said active and reactive chambers, said first pilot passageway including a second restricted orifice (e.g.110), whereby, when said element portion engages said seat to close said main passageway, fluid may flow from one of said active and reactive chambers to the other of said active and reactive chambers by passing sequentially through said first and second orifices.

2. A mechanism according to claim 1 characterised in that the cross-sectional area of one of said restricted orifices is variable.

3. A mechanism according to claim 2 characterised by a motor mounted on said member and having an output shaft selectively movable relative to said member to vary said variable restricted orifice.

4. A mechanism according to claim 2 characterised in that the cross-sectional area of said variable restricted orifice may be varied as a function of the position of said member relative to said enclosure.

5. A mechanism according to claim 3 characterised in that said output shaft is arranged for linear movement or rotational movement relative to said member.

6. A mechanism according to any preceding claim characterised in that said first restricted orifice is of fixed cross-sectional area.

7. A mechanism according to any preceding claim characterised in that said valve element includes a poppet or a piston, and resilient means for biasing said valve element to move toward said seat.

8. A mechanism according to claim 1 characterised in that said valve element includes a diaphragm.

9. A mechanism according to claim 1 and further characterised by a first check valve operatively arranged in said first pilot passageway for permitting only unidirectiional flow of fluid from said second chamber to said other of said active and reactive chambers.

10. A mechanism according to claim 1 and further characterised by a second pilot passageway provided through said member and communicating said second chamber with said other of said active and reactive chambers, said second pilot passageway including a third restricted orifice.

11. A mechanism according to claim 9 and further characterised by a second check valve arranged in said second pilot passageway for permitting only unidirectional flow of fluid from said other of said active and reactive chambers to said second chamber.

12. A mechanism according to claim 10 characterised in that said second and third restricted orifices are of variable cross-sectional area.

37

13.   A mechanism according to claim 10 and further characterised by a motor mounted on said member and having an output shaft movable relative to said member for varying the cross-sectional area of said second and third restricted orifices.

14.   A mechanism according to claim 15 characterised in that said output shaft is movable linearly or rotatively relative to said member.

15.   A mechanism according to claim 1 characterised in that when said element portion engages said seat, said element has a first cross-sectional area exposed to the pressure in said active chamber and has a second cross-sectional area exposed to the pressure in said reactive chamber, the cross-sectional area of said element second surface being substantially equal to the sum of said first and second cross-sectional areas.

8608:B:2JJK3

Fig.1.

Fig.2a.

Fig.2b.

Fig.3a.

Fig.3b.

Fig.3c.

Fig.4.

020446

Fig.5.

Fig.6a.

Fig.6b.

Fig.7a.

Fig.7b.

Fig.7c.

Fig.8.

0200446

Fig.9.

Fig.10a.

Fig.10b.

Fig.11.

020446

Fig. 12.

Fig. 13a.

Fig. 13b.

Fig. 14.

020446

European Patent Office

**EUROPEAN SEARCH REPORT**

Application number

EP 86302967.4

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (Int. Cl.4) |
| A | <u>DE - A - 3 321 680</u> (TOKICO LTD.) <br> * Totality * | 1 | F 16 F 9/44 <br> B 60 G 13/08 |
| A | <u>DE - A - 3 438 467</u> (TOKICO LTD.) <br> * Fig. 1 * | 1 | |
| A | <u>DE - A - 2 242 990</u> (FICHTEL & <br> SACHS AG) <br> * Fig. 1 * | 1 | |
| A | <u>FR - A1 - 2 368 649</u> (NATIONAL <br> RESEARCH DEVELOPMENT CORPORATION) <br> * Fig. 1 * | 1 | |
| A | <u>FR - A - 2 180 487</u> (CHRYSLER <br> FRANCE) <br> * Fig. 1 * | 1 | TECHNICAL FIELDS SEARCHED (Int. Cl.4) <br><br> F 16 F 9/00 <br> B 60 G 13/00 |
| A | <u>GB - A - 2 119 473</u> (ATSUGI MOTOR <br> PARTS CO.) <br> * Fig. 1 * | 1 | |

The present search report has been drawn up for all claims

| Place of search | Date of completion of the search | Examiner |
|---|---|---|
| VIENNA | 01-08-1986 | PIRKER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82